# EUROPÄISCHE PATENTSCHRIFT

(11) **EP 3 477 048 B1**
(45) Veröffentlichungstag und Bekanntmachung des Hinweises auf die Patenterteilung: **18.08.2021**
(21) Anmeldenummer: 18201833.3
(22) Anmeldetag: 22.10.2018
(51) Int. Cl.: F01D 5/10, F01D 5/26, F01D 11/00, F01D 25/04, F04D 29/66

(54) **KOMBINATION ZUM ABDICHTEN EINES SPALTS ZWISCHEN TURBOMASCHINENSCHAUFELN UND ZUM REDUZIEREN VON SCHWINGUNGEN DER TURBOMASCHINENSCHAUFELN**
ARRANGEMENT FOR SEALING A GAP BETWEEN TURBOMACHINE BLADES AND FOR REDUCING VIBRATIONS OF THE TURBOMACHINE BLADES
AGENCEMENT D'ÉTANCHÉITÉ D'UNE INTERSTICE ENTRE AUBES DE TURBOMACHINE ET DE RÉDUCTION DES VIBRATIONS DES AUBES DE TURBOMACHINE

(30) Priorität: 27.10.2017 DE 102017010024; 01.03.2018 DE 102018203093
(43) Veröffentlichungstag der Anmeldung: 01.05.2019
(73) Patentinhaber: MTU Aero Engines AG, 80995 München (DE)
(72) Erfinder: Hartung, Andreas, 81829 München (DE)

(56) Entgegenhaltungen:
- EP-A1- 2 484 870
- EP-A1- 3 054 103
- DE-A1- 3 245 069
- DE-T2- 69 506 346
- US-A- 5 803 710

## Beschreibung

Die vorliegende Erfindung betrifft eine Kombination zum Abdichten eines Spalts zwischen Schaufelplattformen zweier benachbarter Schaufeln einer Turbomaschine und Reduzieren von Schwingungen wenigstens einer der Schaufeln, eine Turbomaschinenschaufelanordnung mit zwei benachbarten Schaufeln und der Kombination, eine Turbomaschine, insbesondere einen Verdichter oder eine Turbine einer Gasturbine, mit der Turbomaschinenschaufelanordnung sowie eine Verwendung der Kombination zum Abdichten eines Spalts zwischen Schaufelplattformen zweier benachbarter Schaufeln einer Turbomaschine und Reduzieren von Schwingungen wenigstens einer der Schaufeln.

Aus der eigenen EP 3 239 461 A1 ist eine Turbomaschinenschaufelanordnung mit einem neuartigen Konzept zur Reduzierung von Schwingungen von Schaufelblättern mittels eines Stimmkörperführungsgehäuses mit wenigstens einem Hohlraum bekannt, in dem wenigstens ein Stimmkörper mit Bewegungsspiel zum Stoßkontakt mit dem Stimmkörperführungsgehäuse angeordnet ist, welches im Wesentlichen nicht auf Reibungsdissipation, sondern einer Verstimmung von Eigenformen und - frequenzen durch Stöße der Stimmkörper basiert.

Die US 5,803,710 A betrifft ein kombiniertes Dicht-/Dämpfelement, bei dem zwei rippenartige Dämpfer einen Dichtstreifen tragen.

Die EP 2 484 870 A1 betrifft einen Stimmkörper, der aus einem einen Hohlraum begrenzenden Stimmkörpergehäuse und einem in dem Hohlraum angeordneten Bewegungsteil aufgebaut ist. Der Stimmkörper wird insbesondere in einer Tasche unterhalb der Innenplattform von Laufschaufeln angeordnet.

Die EP 3 054 103 A1 betrifft ein Dicht- und Dämpfelement, das aus einem Dämpfer und einem einstückig damit ausgebildeten Dichtstreifen aufgebaut ist.

Eine Aufgabe einer Ausführung der vorliegenden Erfindung ist es, eine Turbomaschine, insbesondere einen Verdichter oder eine Turbine einer Gasturbine, zu verbessern.

Diese Aufgabe wird durch eine Kombination mit den Merkmalen des Anspruchs 1 bzw. deren Verwendung nach Anspruch 11 gelöst. Ansprüche 7 - 9 stellen eine Turbomaschinenschaufelanordnung bzw. Turbomaschine mit (wenigstens) einer hier beschriebenen Kombination unter Schutz. Vorteilhafte Ausführungsformen der Erfindung sind Gegenstand der Unteransprüche.

Nach einer Ausführung der vorliegenden Erfindung weist eine Kombination eine ein- oder mehrteilige Dichtung, die einen Spalt zwischen Schaufelplattformen zweier, insbesondere in einer Umfangsrichtung, benachbarter Schaufeln, insbesondere deren einander in Umfangsrichtung gegenüberliegenden S(chaufelplattforms)tirnseiten, einer Turbomaschine wenigstens teilweise, insbesondere gegen ein Arbeitsfluid der Turbomaschine, abdichtet bzw. hierzu vorgesehen, insbesondere eingerichtet, ist bzw. verwendet wird, und ein ein- oder mehrteiliges Reduziermittel auf, das Schwingungen wenigstens einer dieser beiden Schaufeln, insbesondere Schwingungen wenigstens eines mit einer der Schaufelplattformen verbundenen Schaufelblatts der entsprechenden Schaufel zur Strömungsumlenkung eines Arbeitsfluids der Turbomaschine, reduziert bzw. hierzu vorgesehen, insbesondere eingerichtet, ist bzw. verwendet wird.

Nach einer Ausführung der vorliegenden Erfindung weist die Dichtung wenigstens eine (erste) Rippe mit einer, insbesondere minimalen, maximalen oder mittleren, Rippendicke und wenigstens eine Wandung mit einer, insbesondere minimalen, maximalen oder mittleren, Wandstärke, die kleiner als diese Rippendicke ist, in einer Ausführung höchstens 75%, insbesondere höchstens 50%, in einer Ausführung höchstens 25% und in einer Weiterbildung höchstens 10% dieser Rippendicke beträgt, auf.

Hierdurch weist in einer Ausführung die Dichtung eine bionische Struktur auf, welche vorteilhaft das Gewicht der Dichtung reduzieren und/oder, insbesondere zugleich, eine definierte Nachgiebigkeit, durch die eine unerwünschte Kopplung zwischen den Schaufel(plattform)en reduziert, insbesondere vermieden, werden kann, und/oder eine höhere Festigkeit, durch die Lebensdauer und/oder Ausfallsicherheit verbessert werden kann, realisieren kann.

Zusätzlich zu diesem Dichtungsaspekt weist nach einer Ausführung der vorliegenden Erfindung das Reduziermittel ein ein- oder mehrteiliges Stimmkörperführungsgehäuse mit genau einem oder mehreren Hohlräumen auf, wobei in dem bzw. einem oder mehreren der Hohlräume (jeweils) genau ein oder mehrere Stimmkörper mit Bewegungsspiel angeordnet sind, die im Betrieb Stoßkontakte mit dem Stimmkörperführungsgehäuse ausführen bzw. hierzu vorgesehen, insbesondere eingerichtet, sind bzw. verwendet werden.

Hierdurch kann in einer Ausführung vorteilhaft ein Spalt einer Turbomaschinenschaufelanordnung mit einem an sich aus der eigenen WO 2012/095067 A1 und EP 3 239 461 A1 bekannten Reduziermittel zur Reduzierung von Schwingungen von Schaufelblättern, welches im Wesentlichen nicht auf Reibungsdissipation, sondern einer Verstimmung von Eigenformen und -frequenzen durch Stöße von Stimmkörpern basiert, abgedichtet und so insbesondere ein Wirkungsgrad der Turbomaschine(nschaufelanordnung) verbessert und/oder das Reduziermittel gegen ein Arbeitsfluid der Turbomaschine geschützt werden.

Wie sich aus Vorstehendem ergibt, können beide Aspekte in einer Ausführung vorteilhaft miteinander kombiniert sein, wobei insbesondere die definierte Nachgiebigkeit der Dichtung nach dem Dichtungsaspekt die Reduzierung von Schwingungen durch Stöße der Stimmkörper besonders vorteilhaft unterstützen kann.

In einer Ausführung (des Dichtungsaspekts) weist das Reduziermittel keinen in einem Hohlraum eines Stimmkörperführungsgehäuses angeordneten Stimmkörper auf, es kann insbesondere einen ein- oder mehrteiligen, in einer Ausführung massiven bzw. hohlraumlosen, Reibungsdämpfer, insbesondere -körper, aufweisen, der mit Bewegungsspiel an bzw. relativ zu einer oder beiden benachbarten Schaufeln gelagert ist bzw. wird, insbesondere ein solcher sein. Hierbei kann in einer Ausführung die definierte Nachgiebigkeit der Dichtung nach dem Dichtungsaspekt die dissipative Reduzierung von Schwingungen besonders vorteilhaft unterstützen.

In einer Ausführung werden bzw. sind die Dichtung und das Reduziermittel miteinander, insbesondere durch einen Steg, verbunden, insbesondere einstückig bzw. integral miteinander ausgebildet. In einer Weiterbildung ist der Steg derart ausgebildet, insbesondere elastisch, dass er eine Relativbewegung des Reduziermittels relativ zur Dichtung und damit eine dissipative Relativbewegung des Reduziermittels relativ zu den Schaufeln bei gegenüber den Schaufeln wenigstens im Wesentlichen unbewegter Dichtung ermöglicht.

Hierdurch kann in einer Ausführung die Montage vereinfacht werden.

In einer alternativen Ausführung werden bzw. sind die Dichtung und das Reduziermittel miteinander nicht bzw. unverbunden.

Hierdurch kann in einer Ausführung die Abdichtung und/oder Schwingungsreduzierung verbessert werden.

In einer Ausführung werden/wird bzw. sind/ist die Dichtung und/oder das Reduziermittel, insbesondere das Stimmkörperführungsgehäuse, (jeweils) vollständig oder teilweise mithilfe eines generativen bzw. additiven Fertigungsverfahrens hergestellt.

Hierdurch kann in einer Ausführung das Reduziermittel, insbesondere Stimmkörperführungsgehäuse, bzw. die bionische (Struktur der) Dichtung besonders vorteilhaft ausgebildet werden.

Zusätzlich oder alternativ bestehen/besteht in einer Ausführung die Dichtung und/oder das Reduziermittel, insbesondere das Stimmkörperführungsgehäuse, (jeweils) vollständig oder teilweise aus einer Nickellegierung, insbesondere Haynes230® und/oder MARM509®.

Hierdurch kann in einer Ausführung vorteilhaft Gewicht, Lebensdauer und/oder Ausfallsicherheit der Kombination verbessert werden.

Gemäß der Erfindung weist die Dichtung eine oder mehrere weitere Rippen auf.

In einer Weiterbildung weist bzw. weisen, die weitere(n) Rippe(n jeweils) eine, insbesondere minimale, maximale oder mittlere, Rippendicke auf, die größer als die vorstehend genannte, insbesondere minimale, maximale oder mittlere, Wandstärke der Wandung ist, in einer Ausführung (jeweils) wenigstens 125%, insbesondere wenigstens 200%, in einer Ausführung wenigstens 400% und in einer Weiterbildung wenigstens 1000% dieser Wandstärke der Wandung beträgt.

Gemäß der Erfindung zweigt bzw. zweigen die bzw. eine oder mehrere der weitere(n) Rippe(n jeweils) von der einen (ersten) Rippe ab oder kreuzt bzw. kreuzen diese
Gemäß einer Ausführung ist bzw. sind die eine (erste) Rippe und/oder die bzw. eine oder mehrere der weitere(n) Rippe(n) und/oder die Wandung der Dichtung, insbesondere in Umfangsrichtung, gekrümmt.

Hierdurch kann in einer Ausführung jeweils alleine, insbesondere aber in Kombination von zwei oder drei der vorgenannten Merkmale Rippen-/Wandstärkenverhältnis, -Krümmung und Rippen-Abzweigung bzw. -Kreuzung, eine besonders vorteilhafte, in einer Ausführung (wirbeltier-, insbesondere human)brustkorb(skelett)artige, bionische Dichtung realisiert und so vorteilhaft das Gewicht reduziert und/oder, insbesondere zugleich, eine definierte Nachgiebigkeit, durch die eine unerwünschte Kopplung zwischen den Schaufel(plattform)en reduziert, insbesondere vermieden, werden kann, und/oder eine höhere Festigkeit, durch die Lebensdauer und/oder Ausfallsicherheit verbessert werden kann, zur Verfügung gestellt werden.

Nach einer Ausführung der vorliegenden Erfindung weist eine Turbomaschinenschaufelanordnung zwei (in Umfangsrichtung) benachbarte Schaufeln mit, insbesondere radial inneren oder äußeren, Schaufelplattformen und damit, insbesondere stoffschlüssig oder einstückig bzw. integral, verbundenen Schaufelblättern, insbesondere zur Umlenkung eines Arbeitsfluids der Turbomaschine, auf, wobei eine hier beschriebene Kombination zum Abdichten eines Spalts zwischen den benachbarten Schaufelplattformen, insbesondere deren einander in Umfangsrichtung gegenüberliegenden Stirnseiten, und zur Reduzierung von Schwingungen wenigstens einer der Schaufeln, insbesondere Schaufelblätter, auf einer schaufelblattabgewandten Seite der Schaufelplattformen angeordnet ist bzw. wird.

Eine Axialrichtung ist in einer Ausführung parallel zu einer Rotations- bzw. (Haupt)Maschinenachse der Turbomaschine(nschaufelanordnung), eine Umfangsrichtung eine Umlauf- bzw. Rotationsrichtung um diese Achse, eine Radialrichtung senkrecht zur Axial- und Umfangsrichtung.

In einer Ausführung ist bzw. wird das Reduziermittel, insbesondere das Stimmkörperführungsgehäuse, an wenigstens einer der benachbarten Schaufeln befestigt. In einer alternativen Ausführung ist bzw. wird das Reduziermittel beweglich in einer Kavität auf einer schaufelblattabgewandten Seite der Schaufelplattformen angeordnet.

Hierdurch kann in einer Ausführung die Reduzierung von Schwingungen verbessert werden, insbesondere durch Befestigung des Stimmkörperführungsgehäuses an einer oder beiden Schaufeln die Verstimmung von Eigenformen und -frequenzen durch Stöße der Stimmkörper bzw. durch bewegliche Anordnung eines, insbesondere massiven, Reibungsdämpfers, insbesondere -körpers, dessen dissipative Wirkung.

In einer Ausführung ist bzw. wird die Dichtung, insbesondere auch oder nur, stromabwärts hinter dem Reduziermittel, insbesondere Stimmkörperführungsgehäuse, angeordnet.

Zusätzlich oder alternativ übergreift bzw. -lappt das Reduziermittel in einer Ausführung nur eine der beiden Schaufelplattformen wenigstens teilweise. Mit anderen Worten ist bzw. wird in einer Ausführung das Reduziermittel nur unter einer der beiden Schaufelplattformen angeordnet. Dies kann insbesondere die Verstimmung von Eigenformen und -frequenzen durch Stöße verbessern.

In einer alternativen Ausführung übergreift bzw. -läppt das Reduziermittel beide Schaufelplattformen (jeweils) wenigstens teilweise. Mit anderen Worten ist bzw. wird in einer Ausführung das Reduziermittel unter beiden Schaufelplattformen angeordnet. Dies kann insbesondere die dissipative Wirkung eines Reibungsdämpfers verbessern.

Nach einer Ausführung der vorliegenden Erfindung sind die Schaufeln rotorfeste Lauf- oder gehäusefeste Leitschaufeln. Die Turbomaschine ist in einer Ausführung ein Verdichter oder eine Turbine einer Gasturbine, insbesondere eines Flugtriebwerks. Dies stellt besonders vorteilhafte Verwendungen einer erfindungsgemäßen Kombination dar.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: einen Teil einer Turbomaschinenschaufelanordnung mit einer Kombination nach einer Ausführung der vorliegenden Erfindung in einem Axialschnitt längs der Linie I-I in Fig. 2; und
- Fig. 2: einen Teil der Turbomaschinenschaufelanordnung in einem Meridian-schnitt längs der Linie II-II in Fig. 1;
- Fig. 3: eine perspektivische Ansicht der Kombination; und
- Fig. 4: einen Fig. 2 entsprechenden Meridianschnitt durch eine Kombination nach einer weiteren Ausführung der vorliegenden Erfindung.

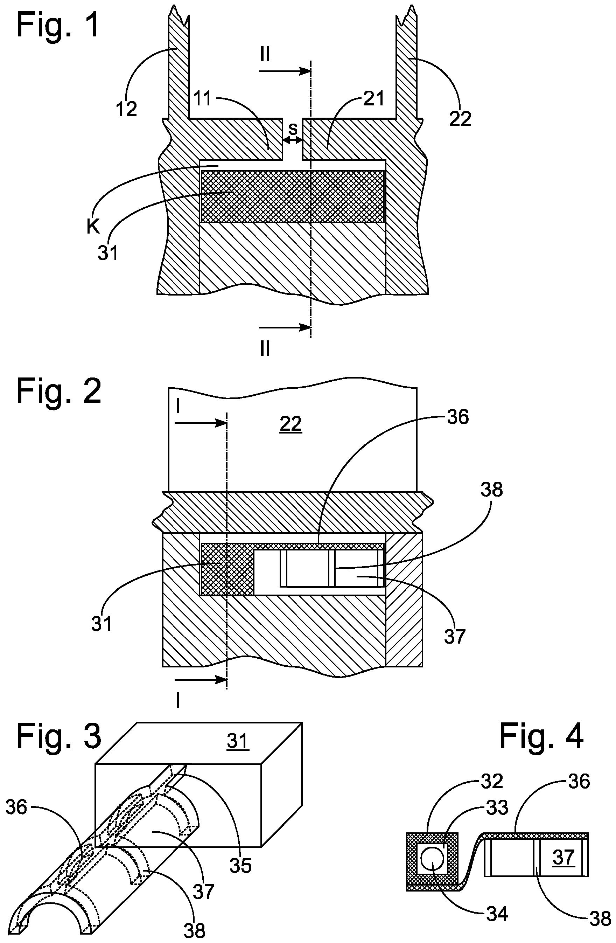

Fign. 1, 2 zeigen in einem Axialschnitt (Fig. 1) senkrecht zu einer (Haupt)Maschinen- bzw. Rotationsachse einer Gasturbine bzw. einem zu diesem Schnitt senkrechten Meridianschnitt (Fig. 2) einen Teil einer Turbomaschinenschaufelanordnung mit zwei in Fig. 1 bzw. Umfangsrichtung benachbarten Schaufeln mit Schaufelplattformen 11, 21 und damit verbundenen Schaufelblättern 12, 22 sowie einer Kombination nach einer Ausführung der vorliegenden Erfindung, die in Fig. 3 in einer perspektivischen Einzelansicht gezeigt ist.

Die Kombination weist eine Dichtung 36-38 zum Abdichten eines Spalts s zwischen den zwei benachbarten Schaufelplattformen 11, 21 und ein Reduziermittel in Form eines massiven Reibungsdämpfers 31 zur Reduzierung von Schwingungen der Schaufelblätter 12, 22 auf, wobei die brustkorbartig ausgebildete Dichtung eine erste Rippe 36 mit einer Rippendicke und eine Wandung 37 mit einer Wandstärke aufweist, die kleiner als die Rippendicke ist.

Dichtung 36-38 und Reduziermittel 31 sind miteinander durch einen Steg 35 verbunden und einstückig miteinander ausgebildet. Der elastische Steg 35 ermöglicht dissipative Relativbewegungen des Reibungsdämpfers 31 bei gleichzeitiger Abdichtung des Spalts s durch die Dichtung 36-38. In einer nicht dargestellten Abwandlung können Dichtung 36-38 und Reduziermittel 31 auch unverbunden sein.

Die Dichtung weist weitere Rippen 38 auf, die jeweils ebenfalls eine Rippendicke aufweisen, die größer als die Wandstärke ist und von der einen (ersten) Rippe 36 abzweigen. Diese weiteren Rippen 38 und die Wandung 37 der Dichtung sind in Umfangsrichtung gekrümmt (vgl. Fig. 3).

Der Reibungsdämpfer 31 ist beweglich in einer Kavität K auf einer schaufelblattabgewandten Seite der Schaufelplattformen 11, 21 aufgenommen.

Die Dichtung 36-38 ist stromabwärts (rechts in Fig. 2) hinter dem Reibungsdämpfer 31 angeordnet, der beide Schaufelplattformen 11, 21 in Umfangsrichtung jeweils übergreift (vgl. Fig. 1).

Fig. 4 zeigt in Fig. 2 entsprechender Weise eine Kombination nach einer weiteren Ausführung der vorliegenden Erfindung. Einander entsprechende Merkmale sind durch identische Bezugszeichen identifiziert, so dass auf die vorstehenden Erläuterungen Bezug genommen und nachfolgend nur auf Unterschiede eingegangen wird.

In der - im Übrigen somit zu Fig. 1-3 gleichen - Ausführung der Fig. 4 weist das Reduziermittel ein Stimmkörperführungsgehäuse 32 mit einem Hohlraum 33, in dem ein Stimmkörper 34 mit Bewegungsspiel zum Stoßkontakt mit dem Stimmkörperführungsgehäuse 32 angeordnet ist, auf.

Der Steg 35 ist in Axialrichtung (horizontal in Fig. 2, 4) derart mehrfach gekrümmt, dass er auf der schaufelplattformabgewandten Seite des Stimmkörperführungsgehäuse 32 vorbeiführt. Wie bei der Ausführung der Fign. 1-3 können in einer nicht dargestellten Abwandlung Dichtung 36-38 und Reduziermittel 32-34 auch unverbunden sein.

Das Stimmkörperführungsgehäuse 32 ist an einer der benachbarten Schaufeln befestigt und übergreift nur eine der beiden Schaufelplattformen in Umfangsrichtung wenigstens teilweise.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 11, 21: Schaufelplattform
- 12, 22: Schaufelblatt
- 31: Reibungsdämpfer
- 32: Stimmkörperführungsgehäuse
- 33: Hohlraum
- 34: Stimmkörper
- 35: Steg
- 36: erste Rippe
- 37: Mantelfläche
- 38: weitere Rippe
- K: Kavität
- s: Spalt

## Patentansprüche

1. Kombination aufweisend eine Dichtung (36-38) zum Abdichten eines Spalts (s) zwischen Schaufelplattformen (11, 21) zweier benachbarter Schaufeln einer Turbomaschine und ein Reduziermittel (31; 32-34) zur Reduzierung von Schwingungen wenigstens einer der Schaufeln, wobei die Dichtung wenigstens eine Rippe (36) mit einer Rippendicke und wenigstens eine Wandung (37) mit einer Wandstärke, die kleiner als die Rippendicke ist, aufweist,
wobei die Dichtung wenigstens eine weitere Rippe (38) aufweist, die eine Rippendicke aufweist, die größer als die Wandstärke ist,
**dadurch gekennzeichnet, dass** die wenigstens eine weitere Rippe (38) von der einen Rippe (36) abzweigt oder die eine Rippe (36) kreuzt.

2. Kombination nach Anspruch 1, **dadurch gekennzeichnet, dass** die Dichtung und das Reduziermittel miteinander, insbesondere durch einen Steg (35), verbunden, insbesondere einstückig miteinander ausgebildet, sind.

3. Kombination nach Anspruch 1, **dadurch gekennzeichnet, dass** die Dichtung und das Reduziermittel unverbunden sind.

4. Kombination nach einem der vorhergehenden Ansprüche, **dadurch gekennzeichnet, dass** das Reduziermittel ein Stimmkörperführungsgehäuse (32) mit wenigstens einem Hohlraum (33), in dem wenigstens ein Stimmkörper (34) mit Bewegungsspiel zum Stoßkontakt mit dem Stimmkörperführungsgehäuse angeordnet ist, aufweist.

5. Kombination nach einem der vorhergehenden Ansprüche, **dadurch gekennzeichnet, dass** die Dichtung und/oder das Reduziermittel, insbesondere ein Stimmkörperführungsgehäuse, wenigstens teilweise mithilfe eines generativen Fertigungsverfahrens hergestellt ist und/oder wenigstens teilweise aus einer Nickellegierung besteht.

6. Kombination nach einem der vorhergehenden Ansprüche, **dadurch gekennzeichnet, dass** wenigstens eine Rippe und/oder Wandung der Dichtung, insbesondere in Umfangsrichtung, gekrümmt ist.

7. Turbomaschinenschaufelanordnung mit zwei benachbarten Schaufeln mit Schaufelplattformen (11, 21) und damit verbundenen Schaufelblättern (12, 22), wobei eine Kombination nach einem der vorhergehenden Ansprüche zum Abdichten eines Spalts (s) zwischen den benachbarten Schaufelplattformen und zur Reduzierung von Schwingungen wenigstens einer der Schaufeln auf einer schaufelblattabgewandten Seite der Schaufelplattformen angeordnet ist.

8. Turbomaschinenschaufelanordnung nach dem vorhergehenden Anspruch, **dadurch gekennzeichnet, dass** das Reduziermittel, insbesondere das Stimmkörperführungsgehäuse, an wenigstens einer der benachbarten Schaufeln befestigt oder beweglich in einer Kavität (K) auf einer schaufelblattabgewandten Seite der Schaufelplattformen angeordnet ist.

9. Turbomaschinenschaufelanordnung nach Anspruch 7 oder 8, **dadurch gekennzeichnet, dass** die Dichtung stromabwärts hinter dem Reduziermittel, insbesondere Stimmkörperführungsge-häuse, angeordnet ist und/oder das Reduziermittel nur eine der beiden Schaufelplattformen oder beide Schaufelplattformen wenigstens teilweise übergreift.

10. Turbomaschine, insbesondere Verdichter oder Turbine einer Gasturbine, mit wenigstens einer Turbomaschinenschaufelanordnung nach einem der Ansprüche 7 bis 9, **dadurch gekennzeichnet, dass** die Schaufeln rotorfeste Lauf- oder gehäusefeste Leitschaufeln sind.

11. Verwendung einer Kombination nach einem der Ansprüche 1 bis 6 zum Abdichten eines Spalts (s) zwischen Schaufelplattformen (11, 21) zweier benachbarter Schaufeln einer Turbomaschine und zur Reduzierung von Schwingungen wenigstens einer der Schaufeln.

## Claims

1. Combination comprising a seal (36-38) for sealing a gap (s) between the blade platforms (11, 21) of two adjacent blades of a turbomachine and a reducing means (31; 32-34)for reducing vibrations of at least one of the blades, wherein the seal comprises at least one rib (36) with a rib thickness and at least one wall (37) with a wall thickness that is smaller than the rib thickness, wherein the seal comprises at least one further rib (38) which has a rib thickness that is greater than the wall thickness, **characterized in that** the at least one further rib (38) branches off from the one rib (36) or crosses the one rib (36).

2. Combination according to claim 1, **characterized in that** the seal and the reducing means are connected to one another, in particular by a web (35), in particular formed as one piece.

3. Combination according to claim 1, **characterized in that** the seal and the reducing means are not connected.

4. Combination according to any of the preceding claims, **characterized in that** the reducing means comprises a damping element guide housing (32) with at least one cavity (33) in which at least one damping element (34) is arranged with play for an impact contact with the damping element guide housing.

5. Combination according to any of the preceding claims, **characterized in that** the seal and/or the reducing means, in particulara damping element guide housing, is at least partially manufactured by using a generative manufacturing process and/or at least partially consists of a nickel alloy.

6. Combination according to any of the preceding claims, **characterized in that** at least one rib and/or wall of the seal is curved, particularly in the circumferential direction.

7. Turbomachine blade arrangement with two adjacent blades with blade platforms (11, 21) and associated airfoil (12, 22), wherein a combination according to any of the preceding claims for sealing a gap (s) between the adjacent blade platforms and for reducing the vibrations of at least one of the blades is arranged on a side of the blade platforms facing away from the airfoil.

8. Turbomachine blade arrangement according to the preceding claim, **characterized in that** the reducing means, in particular the damping element guide housing, is attached to at least one of the adjacent blades or is movably arranged in a cavity (K) on a side of the blade platforms facing away from the airfoil.

9. Turbomachine blade arrangement according to claim 7 or 8, **characterized in that** the seal is arranged downstream behind the reducing means, in particular the damping element guide housing, and/or that the reducing means at least partially overlaps only one of the two blade platforms or both blade platforms.

10. Turbomachine, in particular a compressor or a turbine of a gas turbine, with at least one turbomachine blade arrangement according to any of claims 7 to 9, **characterized in that** the blades are rotor-fixed moving or housing-fixed guide blades.

11. Use of a combination according to any of claims 1 to 6 for sealing a gap (s) between blade platforms (11, 21) of two adjacent blades of a turbomachine and for reducing vibrations of at least one of the blades.

## Revendications

1. Combinaison présentant un joint (36-38) permettant de sceller un espace (s) entre des plates-formes d'aubes (11, 21) de deuxaubes adjacentes d'une turbomachine et un moyen de réduction (31 ; 32-34) permettant de réduire les vibrations d'au moins une des a ubes, le joint présentant au moins une nervure (36) comportant une épaisseur de nervure et au moins une paroi (37) comportant une épaisseur de paroi inférieure à l'épaisseur de nervure,
le joint présentant au moins une autre nervure (38) dont l'épaisseur est supérieure à l'épaisseur de paroi, **caractérisée en ce que** l'au moins une autre nervure (38) se sépare de la première nervure (36) ou croise la première nervure (36).

2. Combinaison selon la revendication 1, **caractérisée en ce que** le joint et le moyen de réduction sont reliés l'un à l'autre, en particulier par une entretoise (35), en particulier sont formés d'une seule pièce l'un avec l'autre.

3. Combinaison selon la revendication 1, **caractérisée en ce que** le joint et le moyen de réduction ne sont plus reliés.

4. Combinaison selon l'une des revendications précédentes, **caractérisée en ce que** le moyen de réduction présente un carterde guidage d'élément d'amortissement (32) comportant au moins un espace creux(33) dans lequel est disposé au moins un élément d'amortissement (34) comportant un jeu de mouvement permettant un contact d'impact avec le carterde guidage d'élément d'amortissement.

5. Combinaison selon l'une des revendications précédentes, **caractérisée en ce que** le joint et/ou le moyen de réduction, en particulier un carterde guidage d'élément d'amortissement, est au moins partiellement fabriqué selon un procédé de fabrication additive et/ou est au moins partiellement constitué d'un alliage de nickel.

6. Combinaison selon l'une des revendications précédentes, **caractérisée en ce qu'**au moins une nervure et/ou paroi du joint est courbée, en particulier dans la direction circonférentielle.

7. Agencement d'aubes de turbomachine comportant deuxaubes adjacentes pourvues des plates-formes d'aubes (11, 21) et des pales d'aubes (12, 22) reliées à celles-ci, une combinaison selon l'une des revendications précédentes permettant de sceller un espace (s) entre les plates-formes d'aubes adjacentes et permettant de réduire les vibrations d'au moins une des aubes étant disposée sur un côté des plates-formes d'aubes opposé aux pales d'aubes.

8. Agencement d'aubes de turbomachine selon la revendication précédente, **caractérisé en ce que** le moyen de réduction, en particulier le carter de guidage d'élément d'amortissement, est fixé à au moins une des aubes adjacentes ou est agencé de manière mobile dans une cavité (K) sur un côté des plates-formes d'aubes opposé aux pales d'aubes.

9. Agencement d'aubes de turbomachine selon la revendication 7 ou 8, **caractérisé en ce que** le joint est disposé en aval derrière le moyen de réduction, en particulier le carterde guidage d'élément d'amortissement, et/ou le moyen de réduction recouvre au moins partiellement une seule des deux plates-formes d'aubes ou les deux plates-formes d'aubes.

10. Turbomachine, en particulier compresseur ou turbine d'une turbine à gaz, comportant au moins un agencement d'aubes de turbomachine selon l'une des revendications 7 à 9, **caractérisée en ce que** les aubes sont des aubes mobiles fixées au rotor ou des aubes directrices fixées au carter.

11. Utilisation d'une combinaison selon l'une des revendications 1 à 6 permettant de sceller un espace (s) entre des plates-formes d'aubes (11, 21) de deuxaubes adjacentes d'une turbomachine et permettant de réduire les vibrations d'au moins une des aubes.
